# EUROPEAN PATENT SPECIFICATION

(11) **EP 2 725 831 B1**
(45) Date of publication and mention of the grant of the patent: **25.04.2018**
(21) Application number: 12189507.2
(22) Date of filing: 23.10.2012
(51) Int. Cl.: H04W 8/12, H04M 15/00, H04W 4/24, H04W 92/02

(54) **METHOD FOR USING A USER EQUIPMENT IN A COVERAGE AREA OF A VISITED PUBLIC LAND MOBILE NETWORK, PUBLIC LAND MOBILE NETWORK AND COMPUTER PROGRAM PRODUCT**
VERFAHREN ZUR VERWENDUNG EINES BENUTZERGERÄTS IN EINEM ABDECKUNGSGEBIET EINES BESUCHTEN ÖFFENTLICHEN LANDFUNKNETZES UND COMPUTERPROGRAMMPRODUKT
PROCÉDÉ D'UTILISATION D'UN ÉQUIPEMENT UTILISATEUR DANS UNE ZONE DE COUVERTURE D'UN RÉSEAU MOBILE TERRESTRE PUBLIC VISITÉ, RÉSEAU MOBILE TERRESTRE PUBLIC ET PRODUIT DE PROGRAMME INFORMATIQUE

(43) Date of publication of application: 30.04.2014
(73) Proprietor: Deutsche Telekom AG, 53113 Bonn (DE)
(72) Inventor: Schweflinghaus, Georg, 53639 Königswinter (DE); Totouom Wabo, Marc, 53225 Bonn (DE); Ostermann, Clemens, 53639 Königswinter (DE); Seidl, Michael, 53227 Bonn (DE); Brune, Peter, 53340 Meckenheim (DE)
(74) Representative: Schwöbel, Thilo K.

(56) References cited:
- EP-A1- 1 622 403
- EP-A2- 1 124 388

## Description

### BACKGROUND

The present invention relates to a method for using a user equipment in a coverage area of a first public land mobile network, the first public land mobile network serving as a visited public land mobile network (VPLMN) to the user equipment, the user equipment having a second public land mobile network as a home public land mobile network.

The present invention further relates to a public land mobile network serving as home public land mobile network to a user equipment camping on a visited public land mobile network.

This invention relates to a telecommunications services apparatus and methods for use with a mobile telecommunications system, such as a mobile phone system. In particular the invention relates to the possibility to hand signalling and contract control for voice, data and messaging services of a customer to another enterprise in certain conditions while keeping control of these services of the customer if the conditions do not apply.

According to one aspect of the present invention, new concepts especially relating to mobile roaming are described. These new concepts may as well have applicability in other areas. The invention is mainly described in the context of GSM (Global System of Mobile Communication) networks but other types of mobile communication networks are concerned as well, especially such mobile communication networks using other technologies or radio access technologies.

Typically, in a present GSM operations network, a customer has always one contract with at least one phone number and at least one SIM card.

In a standard contract of a customer with a GSM operator (or other mobile network operator, hereinafter also called MNO), the customer has one contract with the operator and the operator owns and/or operates the (home) mobile communication network. In the following, the term mobile communication network is used synonymously with the term public land mobile network.

In a standard contract of a customer with a mobile virtual network operator, the customer has a contract with an enterprise that may not have an own GSM network / public land mobile network, but resells the services of another or a standard network operator.

All services in GSM are tailored towards this one-to-one relationship: one contract, one network provider, one (telephone) number, one SIM (Subscriber Identification Module) card.

Especially in roaming situations, i.e. typically in situations where a customer or a user of a user equipment is using a visited public land mobile network rather than the home public land mobile network, the customer or user would prefer being able to choose another network provider or another service provider than the service provider / mobile network operator that operates the home public land mobile network or with which the user or customer has a contract.

European Patent Application EP1124388 A2 presents the concept of a relay service control procedure that enables network operators and/or service providers to provide home services to the visiting user, who is roaming in their networks. The assumption is that the visited (serving) networks are not readily equipped with the "Service Logic Program" to offer the home services.

European Patent Application EP1622403 A1 relates to a cellular network infrastructure for use in support of inbound roaming users and, more particularly but not exclusively, to the use of the CAMEL infrastructure, specifically intended for support of outbound roamers, to support inbound roamers.

### SUMMARY

The invention is defined by the method, network and computer program product defined in the independent claims.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a user equipment requesting a voice service when camping in a visited (or first) public land mobile network.
Figure 2 schematically illustrates a user equipment requesting a data service when camping in a visited (or first) public land mobile network.
Figures 3 and 4 schematically illustrate a user equipment requesting an SMS (short message service) service when camping in a visited (or first) public land mobile network.
Figure 5 schematically illustrates a user equipment requesting an MMS (multimedia message service) service when camping in a visited (or first) public land mobile network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

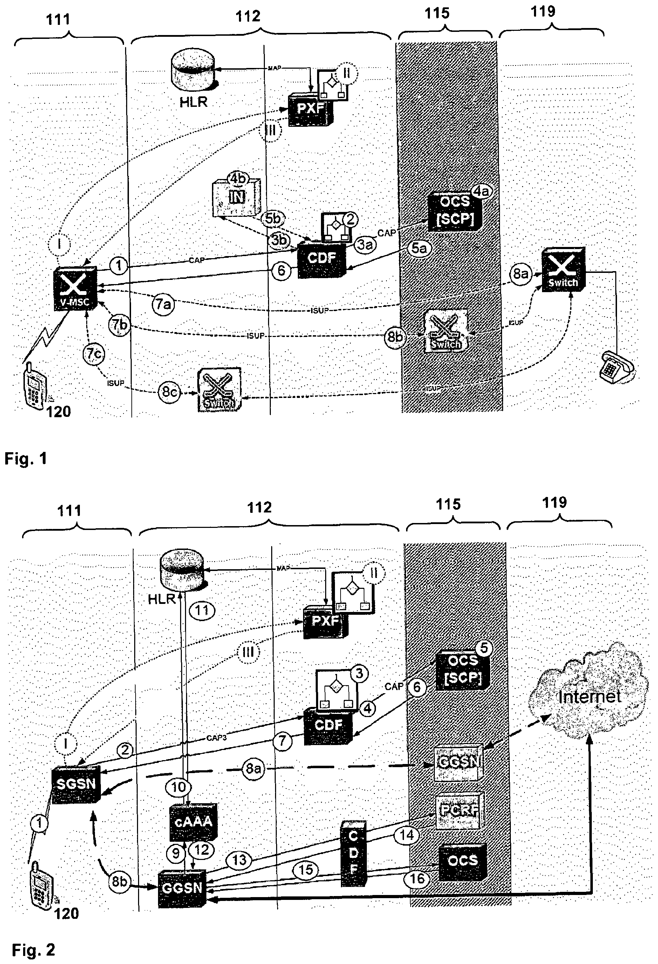

In Figures 1 to 5, a user equipment 120 is schematically shown within a first public land mobile network 111 (i.e. camping on the first public land mobile network). The first public land mobile network 111 is hereinafter also called the visited public land mobile network 111. The home public land mobile network (or second public land mobile network) of the user equipment is designated by reference sign 112 in Figures 1 to 5.

According to the present invention, in such a situation of a roaming service being requested by the user equipment 120, the handling of the call is not entirely handled by the home public land mobile network 112 of the user equipment 120 (or second public land mobile network 112) but the call (or other requested roaming service) is transferred to a alternative roaming provider 115 (hereinafter also called predetermined services provider 115). After the second (or home) public land mobile network 112 having transferred the roaming services request of the user equipment 120 to the alternative roaming provider 115, the alternative roaming provider 115 handles the roaming services request, i.e. terminating the request either in its own network or (in the general case) in association with a terminating network 119.

In today's GSM networks if a customer (or user equipment 120) roams into another country, the visited network in the visited country (i.e. the first (or visited) public land mobile network) will request authentication information for the customer from the customer's home networks HLR (Home Location Register). The home HLR will then answer with different kind of parameters (typically sent to a VLR (Visited Location Register)) to enable the visited network to provide the roaming service to the customer. One of these parameters is for example the information which IN (Intelligent Network) system of the home operator (i.e. the second (or home) public land mobile network 112) should be interrogated.

According to a first aspect of the present invention, a profile exchange function network node (hereinafter also called PxF(Profile Exchange Function)) will intercept this authentication parameter exchange and will alter the parameters inserted into the VLR (Visited Location Register) of the visited network so that a different intelligent network (IN) system can be targeted by the second (or visited) public land mobile network 111 at the second (or home) public land mobile network 112 in case a roaming services request is initiated. The profile exchange function network node will of course only alter the parameters if it is necessary due to a contract of the user equipment 120 (or subscriber) with a predetermined service provider 115 (i.e. another enterprise that wishes to provide telecommunication services to the subscriber); otherwise (i.e. in cases that the customer does not have such a contract with a predetermined service provider 115, the standard signalling stays unaltered.

If in the above described roaming situation a customer with an additional contract for roaming voice services (with a predetermined service provider 115 or alternative roaming provider) initiates a call, the signalling will be send to the alternative roaming provider 115 by an alternative intelligent network (IN) service (also called alternative IN service), typically (but not necessarily) located in the home public land mobile network 112 of the user equipment 120. This alternative IN service corresponds to another important aspect of the present invention, namely a dedicated network node, hereinafter called CDF (Control Dispatch Function) that fulfils a plurality of tasks:
-- It decides if a call belongs to the home provider (i.e. the second public land mobile network 112) or to the alternative roaming provider 115 (i.e. enterprise providing roaming services to the customer). In the latter case the CDF will forward the signalling to the systems of the enterprise providing roaming services where the enterprise has to control the call during its lifetime (initiation, progress, termination). This will allow the predetermined service provider 115 (i.e. the enterprise providing roaming services) to provide its own tariff to customers as well as its own services.
-- It physically decouples the visited network (i.e. the first public land mobile network 111) and the home network (i.e. the second public land mobile network 112) from the systems of the predetermined service provider 115 (or enterprise providing roaming services).
-- It logically decouples the visited network (i.e. the first public land mobile network 111) and the home network (i.e. the second public land mobile network 112) from the systems of the predetermined service provider 115 (i.e. the enterprise providing roaming services) by applying signalling policies; not every signalling possibility will be allowed in order to prevent havoc.
-- It allows to provide CDRs (Charging Data Records) that will enable the home network to bill the predetermined service provider 115 (i.e. the enterprise providing roaming services) in a wholesale fashion.

According to the present invention, it is possible to use a CDF function in every call but this would lead to higher traffic. In combination with the profile exchange function network node, the traffic can be reduced according to the present invention.

Figure 1 shows an end to end flow of events and messages for mobile originated voice services with a deployed CDF function (and with a profile exchange function network node). For mobile terminated calls, the difference would be that for each call the profile exchange function network node has to be queried. A reduction in signalling traffic may only be reached by only inserting the function into traffic routes that carry roaming requests.

The method shown for voice is also applicable for data with variations that derive out of the fact that GSM network elements involved differ in functionality. Figure 2 shows the flow of events for data being the requested roaming service.

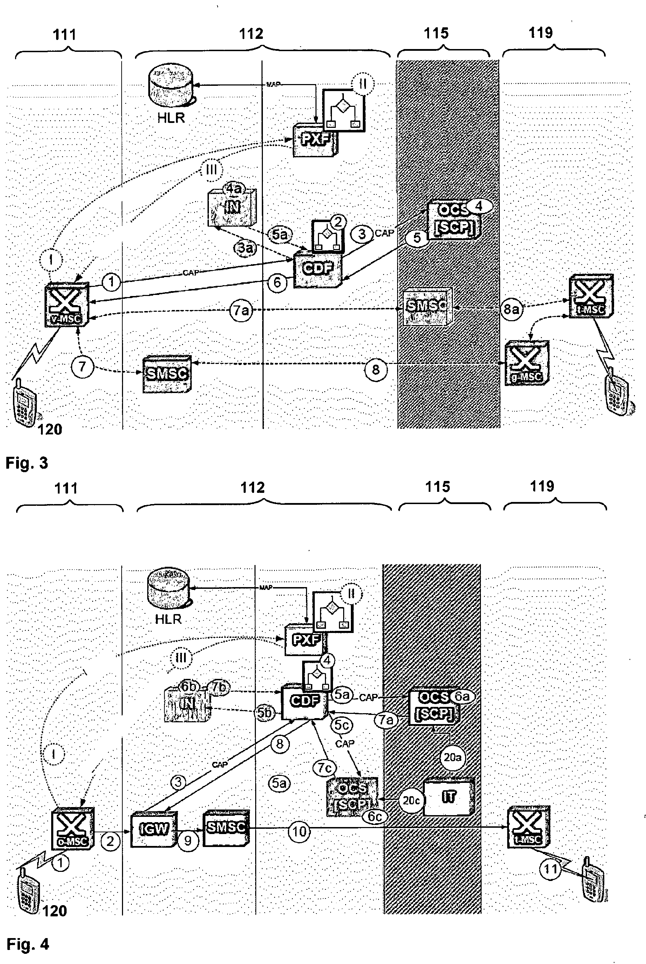

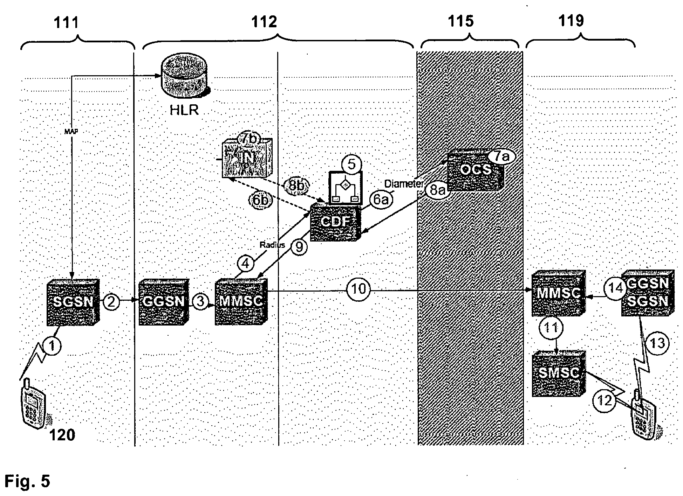

Figures 3 and 4 show the flow of events for mobile originated messaging in the case of SMS, and Figure 5 shows the same for the MMS case. Figure 5 (for the MMS scenario), a solution without a profile exchange function network node is shown.

In the following paragraph, reference signs I, II and III as well as reference signs 1 to 9 correspond to Figure 1. All these reference signs are put in a circle.

In Figure 1, reference sign I corresponds to the Location update request towards the HLR of the second public land mobile network 112. This is realized by means of a MAP request (on the Lu interface) to the profile exchange function network node PXF. Reference sign II corresponds to the profile exchange function logic according to the present invention that checks whether the method according to the present invention should be applied, i.e. whether a contract with a predetermined service provider 115 is active or whether only a contract with the operator of the second (home) public land mobile network 112 is active. Reference sign III corresponds to the situation where a dedicated IN address (O-CSI Originating CAMEL Subscription Info) of the CDF is returned to the VLR (Visitor Location Register) of the visited MSC (mobile switching center) (i.e. in the first (visited) public land mobile network 111) in case the customer has a contract with a predetermined service provider providing roaming services.

In the following, the steps of handling a customer roaming request are described, i.e. the customer initiates a (voice) call while roaming (in the first (visited) public land mobile network 111).

Reference sign 1 correspond to the visited MSC (Mobile Switching Centre) (of the first (visited) public land mobile network 111) initiating, by means of a CAP request, a (roaming) request to the dedicated IN address stored in VLR. This dedicated IN address corresponds to the address of the CDF function network node, i.e. the dedicated network node PCF, that is stored in the VLR with respect to the roaming user equipment 120. The address points towards the CDF function instead of the standard IN system of the second (home) public land mobile network 112 of the user equipment 120.

Reference sign 2 corresponds to the CDF logic (i.e. the logic implemented in the CDF network node) deciding, based on the signalled origination and termination of the call, which IN (i.e. whether the "normal" or usual IN of the second (home) public land mobile network 112 the IN of the predetermined service provider 115 should be used) shall be queried.

Reference sign 3a corresponds to the forwarding of the request (CAP request) to the predetermined service provider 115 (enterprise providing roaming services).

Reference sign 4a corresponds to the online charging system (OCS) or the application server of the predetermined service provider 115 deciding how call shall be established.

Reference sign 5a corresponds to a reply to the CDF node with call control information from the OCS of the predetermined service provider 115 (enterprise providing roaming services).

Reference signs 3b, 4b, and 5b corresponds to such calls that shall stay with home network provider (i.e. the second (home) public land mobile network 112 of the user equipment 120) and that will be handled by the IN system of the home network 112.

Reference sign 6 corresponds to a reply to the MSC of the first (visited) public land mobile network 111 with call control information from the predetermined service provider 115, i.e. the enterprise providing roaming services.

Reference signs 7a (the roaming case using an alternative roaming provider), 7b (no alternative roaming provider), and 7c (no alternative roaming provider) correspond to SS7 IAM signalling (according to the ISUP interface) to the MSC of the first public land mobile network 111 chosen by the respective network node, in case of reference sign 7a from the switch of the predetermined service provider 115.

Reference signs 8a (the roaming case using an alternative roaming provider), 8b (no alternative roaming provider), and 8c (no alternative roaming provider) correspond to SS7 ANM message from the MSC of the first public land mobile network 111 to the respective network node, in case of reference sign 8a to the switch of the predetermined service provider 115.

In the following paragraph, reference signs I, II and III as well as reference signs 1 to 16 correspond to Figure 2. All these reference signs are put in a circle.

In Figure 2, reference sign I corresponds to the Location update request, by the SGSN, towards the HLR of the second public land mobile network 112. This is realized by means of a MAP request to the profile exchange function network node PXF. Reference sign II corresponds to the logic of the PXF that checks whether the method according to the present invention should be applied, e.g. based on certain geographical features of the subscriber (i.e. the user equipment 120), e.g. whether the user equipment 120 roams in a EU country or a EEA country, and if an alternative roaming provider is applicable to the subscriber 120. Reference sign III corresponds to returning
-- an alternative roaming provider common APN (Access Point Name) or
-- an alternative roaming provider dedicated APN
in case that an alternative roaming provider (i.e. a predetermined service provider 115) is to be used for the user equipment 120.

In the following, the steps of handling a customer roaming request are described, i.e. the customer initiates a data transmission while roaming (in the first (visited) public land mobile network 111):
Reference sign 1 corresponds to the customer (i.e. the user equipment 120) initiating a data connection (by means of using the device APN) while roaming.

Reference sign 2 corresponds to the SGSN initiating a (CAP3) request to the O-CSI address stored in VLR; in case of the roaming scenario using a predetermined service provider 115 the CDF network node. The address is the address of the CDF instead of the SCP of the second (home) public land mobile network 112.

Reference sign 3 corresponds to the CDF logic deciding, based on the signalled origination and APN of the call, which IN shall be queried.

Reference sign 4 corresponds to forwarding of the request is forwarded to the alternative roaming provider (or predetermined service provider 115).

Reference signs 5 and 8a correspond to the situation of handling non regulated data; these can be handled by the alternative network provider; the SGSN opens a connection to the APN of the alternative roaming provider (or predetermined service provider 115).

Reference sign 6 corresponds to the alternative roaming provider OCS replying to the CDF how the data connection shall be established.

Reference sign 7 corresponds to the forwarding of the reply of the step of reference sign 6 to SGSN.

Reference sign 8b (and reference signs 9 to 16) corresponds to the situation of regulated data with the alternative roaming provider:
the SGSN opens a connection to the home APN of the second public land mobile network 112;
Reference sign 9: SGSN queries the common AAA server for the profile;
Reference sign 10: cAAA queries HLR;
Reference sign 11: HLR answers;
Reference sign 12: cAAA replies to GGSN request with the adequate profile;
Reference sign 13: GGSN looks up Gx interface for the retrieved profile and sends request
Reference sign 14: PCRF answers and CDF checks if answer is in valid range;
Reference sign 15: GGSN looks up Gy interface for the retrieved profile and sends request to the ARP OCS;
Reference sign 16: ARP OCS decides if connection establishment is allowed and replies the decision to the GGSN after the CDF has checked that the answer is in the valid range;
Finally, the data connection is established for the customer.

In the following paragraph, reference signs I, II and III as well as reference signs 1 to 8 correspond to Figure 3. All these reference signs are put in a circle.

In Figure 3, reference sign I corresponds to the Location update request, by the V-MSC, towards the HLR of the second public land mobile network 112. This is realized by means of a MAP request to the profile exchange function network node PXF. Reference sign II corresponds to the profile exchange function logic according to the present invention that checks whether the method according to the present invention should be applied, i.e. whether a contract with a predetermined service provider 115 is active or whether only a contract with the operator of the second (home) public land mobile network 112 is active. Reference sign III corresponds to the situation where a specific SMS-CSI address of the CDF is returned to the VLR (Visitor Location Register) of the visited MSC (i.e. in the first (visited) public land mobile network 111) in case the customer, or the user equipment 120, has a contract with a predetermined service provider (alternative roaming provider) providing roaming services.

In the following, the steps of handling a customer roaming request are described, i.e. the customer sends an SMS while roaming (in the first (visited) public land mobile network 111):
Reference sign 1 corresponds to the visited MSC initiating a request to the SMS-CSI (SMS-CAMEL Subscription Info) address stored in VLR. The address is the CDF instead of the IN system of the second (home) public land mobile network 112.

Reference sign 2 corresponds to the CDF logic deciding, based on the signalled origination and termination of the user equipment 120, if the call is to be handled by the OCS (Online Charging System) of the enterprise providing roaming services system or the IN of the home operator (i.e. the operator of the second public land mobile network 112).

Reference sign 3 corresponds to the CDF forwarding the signalling to the OCS of the alternative roaming provider, i.e. the enterprise providing roaming services.

Reference sign 4 corresponds to the OCS of the alternative roaming provider (or predetermined service provider 115) deciding how to handle the call (or roaming request of the user equipment 120.

Reference sign 5 corresponds to the OCS of the alternative roaming provider sending the decision to the CDF which checks if the answer matches the allowed policies.

Reference sign 6 corresponds to the CDF forwarding the enterprise providing roaming services decision to the visited MSC (MSC of the first (visited) public land mobile network 111).

Reference sign 7 corresponds to the visited MSC sending the SMS to the SMSC configured in the user equipment 120.

Reference sign 8 correspond to the SMSC delivering the SMS to the destination part (B-party) in the terminating network 119.

Reference signs 3a, 4a, 5a, 7a, and 8a correspond to such SMS requests that shall stay with home network provider (i.e. the second (home) public land mobile network 112 of the user equipment 120) and that will be handled by the IN system of the home network 112.

In the following paragraph, reference signs I, II and III as well as reference signs 1 to 11 correspond to Figure 4. All these reference signs are put in a circle.

In Figure 4, reference sign I corresponds to the Location update request, by the V-MSC, towards the HLR of the second public land mobile network 112. This is realized by means of a MAP request to the profile exchange function network node PXF. Reference sign II corresponds to the profile exchange function logic according to the present invention that checks whether the method according to the present invention should be applied, i.e. whether a contract with a predetermined service provider 115 is active or whether only a contract with the operator of the second (home) public land mobile network 112 is active. Reference sign III corresponds to the situation where a specific SMS-CSI address of the CDF is returned to the VLR (Visitor Location Register) of the visited MSC (i.e. in the first (visited) public land mobile network 111) in case the customer, or the user equipment 120, has a contract with a predetermined service provider (alternative roaming provider) providing roaming services.

In the following, the steps of handling a customer roaming request are described, i.e. the customer sends an SMS while roaming (in the first (visited) public land mobile network 111):
Reference sign 1 corresponds to the user equipment 120 sending an SMS aimed at the SMSC configured in the device (user equipment 120).

Reference sign 2 corresponds to the visited MSC sending the SMS to the SMSC which is intercepted by the IGW (switch).

Reference sign 3 corresponds to the IGW (switch) querying the CDF.

Reference sign 4 corresponds to deciding, based on the signalled origination and termination of the user equipment 120 (A party), whether the call is to be handled by the OCS of the alternative roaming provider or the IN of the home public land mobile network.

Reference sign 5a corresponds to the CDF forwarding the signalling to the OCS of the alternative roaming provider, i.e. the enterprise providing roaming services.

Reference sign 6a corresponds to the OCS of the alternative roaming provider (or predetermined service provider 115) deciding how to handle the call (or roaming request of the user equipment 120.

Reference sign 7a corresponds to the OCS of the alternative roaming provider sending the decision to the CDF which checks if the answer matches the allowed policies.

Reference sign 8 corresponds to the CDF forwarding the enterprise providing roaming services decision to the visited MSC (MSC of the first (visited) public land mobile network 111).

Reference sign 9 corresponds to the IGW sending the SMS to the SMSC configured in the user equipment 120 device.

Reference sign 10 corresponds to the SMSC delivering the SMS to the MSC of the B party (i.e. the recipient of the SMS).

Reference sign 11 corresponds to the MSC delivering the SMS to the destination part (B party device) in the terminating network 119.

Reference signs 5b, 6b, 7b correspond to the alternative where the SMS is sent to a country outside of a specific geographic area, e.g. outside of the EU/EEA.

Reference signs 20c, 5c, 6c, and 7c correspond to the case where the alternative roaming provider does not have an own OCS.

In the following paragraph, reference signs 1 to 14 correspond to Figure 5. All these reference signs are put in a circle.

In Figure 5, the steps of handling a customer roaming request are described, i.e. the customer sends a MMS while roaming (in the first (visited) public land mobile network 111):
Reference sign 1 corresponds to a user equipment 120 sending an MMS and the device will open up a bearer with the MMS APN towards the SGSN

Reference sign 2 corresponds to the SGSN (of the first (visited) public land mobile network 112) connecting to the GGSN (of the second (home) public land mobile network 112) that was indirectly signalled via the MMS APN and an IP (Internet Protocol) bearer is established.

Reference sign 3 corresponds to delivering the MMS by the user equipment 120 to the MMSC and stored.

Reference sign 4 corresponds to the MMSC querying the CDF via radius.

Reference sign 5 corresponds to the CDF deciding if the MMS will be handled by an alternative roaming provider (predetermined service provider 115).

Reference sign 6a corresponds to the CDF querying the OCS (Online Charging Server) of the respective alternative roaming provider (via the Diameter protocol).

Reference sign 7a corresponds to the OCS of the alternative roaming provider deciding what price to apply.

Reference sign 8a corresponds to the OCS of the alternative roaming provider giving the permission for further processing to the CDF.

Reference sign 9 corresponds to the CDF forwarding the permission to the MMSC (MMS Center).

Reference sign 10 corresponds to the MMSC forwarding the MMS to the terminating MMSC derived from the address obtained from the CDF.

Reference sign 11 corresponds to the terminating MMSC in the terminating network 119 sending a WAP Push SMS.

Reference sign 12 corresponds to the terminating device (the B-Party) in the terminating network 119 receiving the WAP Push SMS.

Reference sign 13 corresponds to the terminating device in the terminating network 119 initiating an IP bearer.

Reference sign 14 corresponds to the terminating device (i.e. a user equipment in the terminating network 119) retrieving the MMS from the MMSC in the terminating network 119 via the IP bearer.

## Claims

1. Method for using a user equipment (120) in a coverage area of a first public land mobile network (111), the first public land mobile network serving as a visited public land mobile network (VPLMN) to the user equipment (120), the user equipment (120) having a second public land mobile network (112) as a home public land mobile network, HPLMN, wherein the second public land mobile network (112) comprises a profile exchange function network node, PXF and a control dispatch function network node, CDF, wherein the method comprises the following steps:
- requesting for a predetermined roaming service requested by the user equipment (120) camping on the first public land mobile network (111);
- detecting by the profile exchange function network node, PXF, that the user equipment (120) is associated with the predetermined serviceprovider for the predetermined roaming service;
- checking by a profile exchange function logic of the profile exchange function network node, PXF, whether the method should be applied by checking whether a contract with a predetermined service provider (115) is active or whether only a contract with the operator of the second home public land mobile network (112) is active;
- in case the contract with a predetermined service provider (115) is active:
- returning by the profile exchange function network node, PXF, to the VLR, Visitor Location Register, of the visited Mobile Switching Center, MSC, of the first public land mobile network (111) a dedicated Intelligent Network (IN) address, O-CSI Originating CAMEL Subscription Info, of the CDF or a specific SMS-CSI address of the CDF; and
- addressing and transferring the roaming service request of the user equipment (120) to the CDF;
- determining by the CDF the predetermined service provider (115) associated with the user equipment (120), and
- transferring the roaming service request to the predetermined service provider (115),
wherein a roaming charges settlement between the second public land mobile network (112) and the predetermined service provider (115) is based on a wholesale approach.

2. Public land mobile network (112) serving as home public land mobile network to a user equipment (120) camping on a visited public land mobile network (111), wherein the second public land mobile network (112) comprises a profile exchange function network node, PXF, and a control dispatch function network node, CDF, wherein the profile exchange function network node, PXF, is configured to detect that the user equipment (120) is associated with a predetermined service provider for a predetermined roaming service;
wherein a profile exchange function logic of the profile exchange function network node, PXF, is configured to check whether the method should be applied by checking. Whether a contract with a predetermined service provider (115) is active or whether only a contract with the operator of the second home public land mobile network (112) is active;
wherein the profile exchange function network node, PXF, is configured to return to the VLR, Visitor Location Register, of the visited Mobile Switching Center, MSC, of the first public land mobile network (111) a dedicated Intelligent Network (IN) address, O-CSI Originating CAMEL Subscription Info, of the CDF or a specific SMS-CSI address of the CDF in case the contract with a predetermined service provider (115) is active;
wherein the control dispatch function network node, CDF, is configured to be addressed and to receive the roaming service request of the user equipment (120) in case the contract with a predetermined service provider (115) is active;
wherein the control dispatch function network node, CDF, is configured to - determine CDF the predetermined service provider (115) associated with the user equipment (120) and to transfer the roaming service request to the predetermined service provider (115), wherein a roaming charges settlement between the second public land mobile network (112) and the predetermined service provider (115) is based on a wholesale approach.

3. Computer program product comprising a computer readable program code which, when executed on a computer or on a network node of a public land mobile network (112), causes the computer or the network node of the public land mobile network (112) to perform a method according one of claim 1.

## Patentansprüche

1. Verfahren zur Verwendung einer Nutzerausrüstung (120) in einem Versorgungsgebiet eines ersten öffentlichen Landmobilfunknetzes (111), wobei das erste öffentliche Landmobilfunknetz als ein besuchtes öffentliches Landmobilfunknetz (VPLMN) für die Nutzerausrüstung (120) dient, wobei die Nutzerausrüstung (120) ein zweites öffentliches Landmobilfunknetz (112) als ein öffentliches Heimat-Landmobilfunknetz (HPLMN) hat, wobei das zweite öffentliche Landmobilfunknetz (112) einen Profilaustauschfunktionsnetzknoten (PXF) und einen Steuerungsdispatchfunktionsnetzknoten (CDF) umfasst, wobei das Verfahren die folgenden Schritte umfasst:
- Anfordern eines zuvor festgelegten Roaming-Dienstes, der durch die Nutzerausrüstung (120) angefordert wurde, die in dem ersten öffentlichen Landmobilfunknetz (111) parkt;
- Detektieren, durch den Profilaustauschfunktionsnetzknoten (PXF), dass die Nutzerausrüstung (120) mit dem zuvor festgelegten Dienstanbieter für den zuvor festgelegten Roaming-Dienst verknüpft ist;
- Überprüfen, durch eine Profilaustauschfunktionslogik des Profilaustauschfunktionsnetzknotens (PXF), ob das Verfahren angewendet werden sollte, durch Überprüfen, ob ein Vertrag mit einem zuvor festgelegten Dienstanbieter (115) aktiv ist oder ob nur ein Vertrag mit dem Betreiber des zweiten öffentlichen Heimat-Landmobilfunknetzes (112) aktiv ist;
- falls der Vertrag mit einem zuvor festgelegten Dienstanbieter (115) aktiv ist:
- Zurücksenden, durch den Profilaustauschfunktionsnetzknoten (PXF) zu dem Besucherpositionsregister (VLR) der besuchten Mobilfunkvermittlung (MSC) des ersten öffentlichen Landmobilfunknetzes (111), einer dedizierten Intelligent Network (IN)-Adresse, einer Originating CAMEL Subscription Info (O-CSI) der CDF oder einer spezifischen SMS-CSI-Adresse der CDF; und
- Adressieren und Transferieren der Roaming-Dienstanforderung der Nutzerausrüstung (120) zu der CIF;
- Bestimmen, durch die CDF, des zuvor festgelegten Dienstanbieters (115), der mit der Nutzerausrüstung (120) verknüpft ist, und
- Transferieren der Roaming-Dienstanforderung zu dem zuvor festgelegten Dienstanbieter (115),
wobei eine Roaminggebührenabrechnung zwischen dem zweiten öffentlichen Landmobilfunknetz (112) und dem zuvor festgelegten Dienstanbieter (115) auf einem Großhandelsansatz basiert.

2. Öffentliches Landmobilfunknetz (112), das als öffentliches Heimat-Landmobilfunknetz für eine Nutzerausrüstung (120) dient, die in einem besuchten öffentlichen Landmobilfunknetz (111) parkt, wobei das zweite öffentliche Landmobilfunknetz (112) einen Profilaustauschfunktionsnetzknoten (PXF) und einen Steuerungsdispatchfunktionsnetzknoten (CDF) umfasst, wobei der Profilaustauschfunktionsnetzknoten (PXF) dafür ausgestaltet ist zu detektieren, dass die Nutzerausrüstung (120) mit einem zuvor festgelegten Dienstanbieter für einen zuvor festgelegten Roaming-Dienst verknüpft ist;
wobei eine Profilaustauschfunktionslogik des Profilaustauschfunktionsnetzknotens (PXF) dafür ausgestaltet ist zu überprüfen, ob das Verfahren angewendet werden sollte, indem überprüft wird, ob ein Vertrag mit einem zuvor festgelegten Dienstanbieter (115) aktiv ist oder ob nur ein Vertrag mit dem Betreiber des zweiten öffentlichen Heimat-Landmobilfunknetzes (112) aktiv ist;
wobei der Profilaustauschfunktionsnetzknoten (PXF) dafür ausgestaltet ist, zu dem Besucherpositionsregister (VLR) der besuchten Mobilfunkvermittlung (MSC) des ersten öffentlichen Landmobilfunknetzes (111) eine dedizierte Intelligent Network (IN)-Adresse, eine Originating CAMEL Subscription Info (O-CSI) der CDF oder eine spezifische SMS-CSI-Adresse der CDF zurückzusenden, falls der Vertrag mit einem zuvor festgelegten Dienstanbieter (115) aktiv ist;
wobei der Steuerungsdispatchfunktionsnetzknoten (CDF) dafür ausgestaltet ist, adressiert zu werden und die Roaming-Dienstanforderung der Nutzerausrüstung (120) zu empfangen, falls der Vertrag mit einem zuvor festgelegten Dienstanbieter (115) aktiv ist;
wobei der Steuerungsdispatchfunktionsnetzknoten (CDF) dafür ausgestaltet ist, die CDF des zuvor festgelegten Dienstanbieters (115), der mit der Nutzerausrüstung (120) verknüpft ist, zu bestimmen und die Roaming-Dienstanforderung zu dem zuvor festgelegten Dienstanbieter (115) zu übertragen, wobei eine Roaminggebührenabrechnung zwischen dem zweiten öffentlichen Landmobilfunknetz (112) und dem zuvor festgelegten Dienstanbieter (115) auf einem Großhandelsansatz basiert.

3. Computerprogrammprodukt, das einen computerlesbaren Programmcode umfasst, der, wenn er auf einem Computer oder in einem Netzknoten eines öffentlichen Landmobilfunknetzes (112) ausgeführt wird, den Computer oder den Netzknoten des öffentlichen Landmobilfunknetzes (112) veranlasst, ein Verfahren nach Anspruch 1 auszuführen.

## Revendications

1. Procédé d'utilisation d'un équipement d'utilisateur (120) dans une zone de couverture d'un premier réseau mobile terrestre public (111), le premier réseau mobile terrestre public servant de réseau mobile terrestre public visité (VPLMN) à l'équipement d'utilisateur (120), l'équipement d'utilisateur (120) ayant un second réseau mobile terrestre public (112) en tant que réseau mobile terrestre public de rattachement, HPLMN, dans lequel le second réseau mobile terrestre public (112) comprend un noeud de réseau de fonction d'échange de profil, PXF, et un noeud de réseau de fonction d'envoi de commande, CDF, dans lequel le procédé comprend les étapes suivantes :
- demander un service d'itinérance prédéterminé demandé par l'équipement d'utilisateur (120) domicilié sur le premier réseau mobile terrestre public (111) ;
- détecter par le noeud de réseau de fonction d'échange de profil, PXF, que l'équipement d'utilisateur (120) est associé au fournisseur de service prédéterminé pour le service d'itinérance prédéterminé ;
- vérifier par une logique de fonction d'échange de profil du noeud de réseau de fonction d'échange de profil, PXF, si le procédé doit être appliqué en vérifiant si un contrat avec un fournisseur de service prédéterminé (115) est actif ou si seulement un contrat avec l'opérateur du second le réseau mobile terrestre public de rattachement (112) est actif ;
- dans le cas où le contrat avec un fournisseur de services prédéterminé (115) est actif :
- renvoyer par le noeud de réseau de fonction d'échange de profil, PXF, au VLR, registre des positions des visiteurs, du centre de commutation mobile, MSC, visité du premier réseau mobile terrestre public (111) une adresse de réseau intelligent (IN) dédiée, O-CSI, Informations d'abonnement CAMEL d'origine, de la CDF ou une adresse SMS-CSI spécifique de la CDF ; et
- adresser et transférer la demande de service d'itinérance de l'équipement d'utilisateur (120) à la CDF ;
- déterminer par la CDF le fournisseur de service prédéterminé (115) associé à l'équipement d'utilisateur (120), et
- transférer la demande de service d'itinérance au fournisseur de service prédéterminé (115),
dans lequel un règlement de taxes d'itinérance entre le second réseau mobile terrestre public (112) et le fournisseur de service prédéterminé (115) est basé sur une approche de gros.

2. Réseau mobile terrestre public (112) servant de réseau mobile terrestre public de rattachement à un équipement d'utilisateur (120) domicilié sur un réseau mobile terrestre public visité (111), dans lequel le second réseau mobile terrestre public (112) comprend un noeud de réseau de fonction d'échange de profil, PXF, et un noeud de réseau de fonction d'envoi de commande, CDF, dans lequel le noeud de réseau de fonction d'échange de profil, PXF, est configuré pour détecter que l'équipement d'utilisateur (120) est associé à un fournisseur de service prédéterminé pour un service d'itinérance prédéterminé ;
dans lequel une logique de fonction d'échange de profil du noeud de réseau de fonction d'échange de profil, PXF, est configurée pour vérifier si le procédé doit être appliqué en vérifiant si un contrat avec un fournisseur de service prédéterminé (115) est actif ou si seulement un contrat avec l'opérateur du second réseau mobile terrestre public de rattachement (112) est actif ;
dans lequel le noeud de réseau de fonction d'échange de profil, PXF, est configuré pour renvoyer au VLR, registre des positions des visiteurs, du centre de commutation mobile, MSC, visité du premier réseau mobile terrestre public (111) une adresse de réseau intelligent (IN) dédiée, O-CSI, informations d'abonnement CAMEL d'origine, de la CDF ou une adresse SMS-CSI spécifique de la CDF dans le cas où le contrat avec un fournisseur de service prédéterminé (115) est actif ;
dans lequel le noeud de réseau de fonction d'envoi de commande, CDF, est configuré pour être adressé et pour recevoir la demande de service d'itinérance de l'équipement d'utilisateur (120) dans le cas où le contrat avec un fournisseur de service prédéterminé (115) est actif ;
dans lequel le noeud de réseau de fonction d'envoi de commande, CDF, est configuré pour déterminer par la CDF le fournisseur de service prédéterminé (115) associé à l'équipement d'utilisateur (120) et transférer la demande de service d'itinérance au fournisseur de service prédéterminé (115), dans lequel le règlement des taxes d'itinérance entre le second réseau mobile terrestre public (112) et le fournisseur de service prédéterminé (115) est basé sur une approche de gros.

3. Produit de programme informatique comprenant un code de programme lisible par ordinateur qui, lorsqu'il est exécuté sur un ordinateur ou sur un noeud de réseau d'un réseau mobile terrestre public (112), amène l'ordinateur ou le noeud de réseau du réseau mobile terrestre public (112) à effectuer un procédé selon la revendication 1.
